# FASCICULE DE BREVET EUROPEEN

(11) **EP 0 659 794 B1**
(45) Date de publication et mention de la délivrance du brevet: **10.03.1999**
(21) Numéro de dépôt: 94402920.6
(22) Date de dépôt: 16.12.1994
(51) Int. Cl.: C08G 61/12

(54) **Procédé et bain de dépôt électrolytique de polypyrrole sur une surface de métal oxydable par électropolymérisation**
Bad und elektrolytisches Verfahren zum Aufbringen von Polypyrrol auf einer oxydierbaren Metalloberfläche durch Elektropolymerisierung
Bath and electrolytic method for coating an oxidizable metallic surface with polypyrrole by electropolymerization

(30) Priorité: 21.12.1993 FR 9315385
(43) Date de publication de la demande: 28.06.1995
(73) Titulaire: SOLLAC, 92800 Puteaux (FR)
(72) Inventeur: Lacaze, Camille, F-75004 Paris (FR); Petitjean, Jacques, F-55100 Verdun (FR); Aeiyach, Salah, F-75015 Paris (FR); Mir, Hedayatullah, F-75014 Paris (FR)
(74) Mandataire: Le Guen, Gérard

(56) Documents cités:
- WO-A-90/10095
- FR-A- 2 679 240
- PATENT ABSTRACTS OF JAPAN vol. 15, no. 82 (E-1038) 26 Février 1991 & JP-A-02 299 213 (NIPPON CHEMICON CORP.) 11 Décembre 1990
- CHEMICAL PATENTS INDEX, BASIC ABSTRACTS JOURNAL Week 8739, 25 Novembre 1987 Derwent Publications Ltd., London, GB; AN 87-273477 & JP-A-62 189 714 (NIPPON TSUSHIN KOGY) 19 Août 1987

## Description

La présente invention concerne un procédé de dépôt d'un révêtement adhérent de polypyrrole sur la surface d'une pièce en métal oxydable, notamment à base de fer, de zinc, de cuivre, de nickel, d'aluminium ou de leurs alliages, par électropolymérisation d'une solution électrolytique aqueuse ou hydroalcoolique de pyrrole et/ou d'un ou plusieurs pyrroles substitués, où l'anode du dispositif d'électropolymérisation est constituée de ladite pièce en métal oxydable.

Dans la présente demande, on emploie conventionnellement l'expression "polypyrrole" pour désigner aussi bien un polymère de pyrrole qu'un polymère d'un dérivé de pyrrole ou un copolymère comprenant du pyrrole.

On emploie également l'expression "électropolymérisation du pyrrole ou des pyrroles substitués" pour désigner une oxydation par électrolyse de monomère dissous dans une solution électrolytique suivie d'une polymérisation anodique du monomère oxydé avec les anions de l'électrolyte dissous; le polymère ainsi obtenu est également oxydé et dopé par les anions de l'électrolyte et donc conducteur électrique; la surface de l'anode ainsi revêtue par ce polymère reste donc conductrice, ce qui permet la poursuite de l'oxydation à l'interface anode-électrolyte et le dépôt de couches d'épaisseur contrôlable.

On sait déposer selon un procédé du type précité un revêtement adhérent et homogène de polypyrrole sur une pièce en métal peu oxydable, soit en métal noble comme par exemple l'or et le platine, soit en acier inoxydable.

De tels dépôts ne sont pas possibles sur des pièces en métal plus oxydable, par exemple le fer, l'acier, le zinc, le cuivre, le nickel ou l'aluminium, parce que ladite pièce métallique qui sert d'anode se dissout dans la solution électrolytique aqueuse ou hydroalcoolique; ce phénomène de dissolution anodique croît généralement lorsque la température de la solution augmente.

De tels dépôts ont toutefois été réalisés sur un substrat à base de fer ou d'aluminium en utilisant un bain électrolytique aqueux contenant des nitrates ou des oxalates selon BECK et MICHAELIS, Journal of Coating Technology; vol. 64, n° 808, pp. 59-67 (1992); dans le cas des oxalates, les dépôts obtenus peuvent être particulièrement adhérents et homogènes.

Selon ce document, l'adhérence et l'homogénéité du dépôt obtenu dépendent des conditions de réalisation du dépôt.

En particulier, cette adhérence augmente avec la température de la solution d'électropolymérisation; mais comme l'augmentation de la température entraîne aussi celle de la dissolution du substrat aux dépens de la réaction d'électropolymérisation du pyrrole, on reste limité en adhérence.

En particulier également, cette adhérence augmente lorsque les concentrations en pyrrole ou en oxalates diminuent; mais il est connu que la diminution de ces concentrations entraîne celle du rendement électrique de l'opération de dépôt; on risque alors, à vouloir augmenter l'adhérence, d'aboutir à des conditions électriques de dépôt incompatibles avec une application industrielle.

Par ailleurs, de tels bains ne permettent pas des intensités d'électrolyse élevées, c'est-à-dire des vitesses de dépôt élevées, tout en conservant les propriétés d'adhérence et d'homogénéité du dépôt.

En outre, dans les conditions de dépôt les plus favorables à l'adhérence, en particulier acides, il peut être nécessaire d'effectuer un traitement préalable de passivation de la pièce métallique à revêtir, par exemple par dépôt d'oxyde de manganèse, afin d'éviter une phase de dissolution du substrat au début de la polarisation de l'anode.

Enfin, de tels dépôts présentent l'inconvénient d'être peu conducteurs, ce qui peut être gênant lorsque l'on souhaite assembler par soudure électrique des pièces métalliques revêtues de tels dépôts, ou lorsque l'on souhaite effectuer d'autres dépôts, en particulier électrolytiques, sur ce même type de pièces.

L'invention a donc pour but de permettre un dépôt adhérent, homogène et conducteur de polypyrrole sur une pièce en métal oxydable, non seulement à base de fer, mais aussi notamment en zinc, cuivre, nickel, aluminium ou leurs alliages, d'éviter un prétraitement à ladite pièce, d'améliorer fortement la vitesse du dépôt, y compris dans des procédés de dépôt électrolytique en continu, notamment lorsque la pièce métallique est une tôle défilant à grande vitesse.

A cet effet, la présente invention a pour objet un procédé de dépôt d'un revêtement homogène et très adhérent de polypyrrole sur la surface d'une pièce en métal oxydable, notamment à base de fer, de zinc, de cuivre, de nickel ou d'aluminium et de leurs alliages, par électropolymérisation d'un bain électrolytique aqueux ou hydroalcoolique contenant du pyrrole et/ou un ou plusieurs pyrroles substitués en solution, où l'anode du dispositif d'électropolymérisation est constituée de ladite pièce en métal oxydable, caractérisé en ce que ladite solution contient des ions choisis parmi les ions de formule : 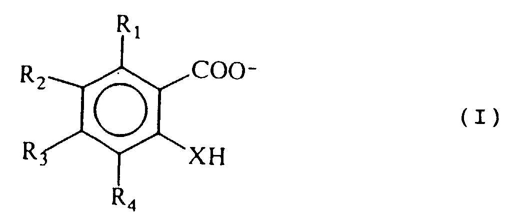 dans laquelle :
X est choisi parmi 0, S et NH,
R₁, R₂, R₃ et R₄ sont choisis indépendamment l'un de l'autre parmi-H, -Cl, -Br, -F, -I, -OH -SH, -NH₂, -CHO, -COOH, -SO₃H et leurs dérivés, des groupes aryle, alkyle en C₁ à C₂₀, aralkyle et alkylaryle, ces groupes pouvant être substitués par un ou plusieurs groupes choisis parmi -OH, -SH, -NH₂, -CHO, -COOH, =O, -CONH₂, SO₃H, époxy ou alcoxy en C₁-C₆, ou pouvant former entre eux une structure cyclique.

L'utilisation d'ions de formule I, tels que des ions salicylates, dans le bain électrolytique aqueux permet, de manière surprenante, à la fois de ralentir fortement l'oxydation du métal en surface de la pièce en métal oxydable et de conférer à ladite surface des propriétés électrocatalytiques proches de celle d'une surface de platine vis-à-vis de la réaction d'électropolymérisation du pyrrole.

Les ions de formule I peuvent être associés en solution à des cations métalliques (notamment de métaux alcalins) ou d'ammonium N⁺(R)₄ (où R est un groupe alkyle ou aralkyle) solubles dans le bain électrolytique.

Les ions de formule I peuvent être avantageusement choisis de telle sorte qu'ils améliorent le contact entre le bain électrolytique et la pièce métallique à revêtir et/ou la solubilité des monomères de pyrrole et/ou d'un ou plusieurs pyrroles substitués. Cette sélection avantageuse permet d'élargir la gamme des polymères de pyrrole ou de dérivés du pyrrole déposés par le procédé selon l'invention en fonction des propriétés requises du revêtement.

Les composés pyrroliques polymérisables utilisés comme produits de départ sont bien entendu des composés pyrroliques non substitués en position alpha.

Les composés pyrroliques peuvent être notamment choisis parmi les composés de formule II : 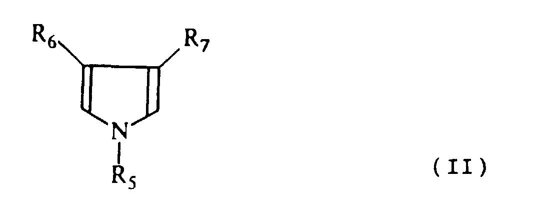 dans laquelle R₆ et R₇ sont choisis indépendamment l'un de l'autre parmi -H, -Cl, -Br, -F, -I, -OH, -SH, -NH₂, -CHO, -COOH et leurs dérivés,
ou dans laquelle R₆ et R₇ répondent respectivement à la formule X₆-R'₆, X₇-R'₇ où X₆, X₇ sont choisis indépendamment l'un de l'autre parmi 0, S, NH,
et/ou dans laquelle R₅, R₆ ou R'₆ et R₇ ou R'₇ représentent indépendamment un atome d'hydrogène, un groupe aryle, un
groupe alkyle ou un groupe aralkyle,
ces groupes pouvant être substitués par un ou plusieurs groupes choisis parmi -OH, -SH, -NH₂, -CHO, -COOH, =O, -CONH₂, N(X,X',X'')⁺, -SO₃H, époxy ou alcoxy en C₁-C₆ et leurs dérivés,
les groupes R₆ ou R'₆ d'une part et R₇ ou R'₇ d'autre part pouvant former entre eux une structure cyclique,
ou parmi les oligomères inférieurs d'un monomère de formule II, comportant jusqu'à quatre motifs dérivés dudit monomère,
ou parmi les composés rassemblant plusieurs motifs de formule II, qui peuvent être différents l'un de l'autre où au moins une des liaisons C-C de chaque cycle pyrrolique de chaque motif de formule II est aussi une des liaisons C-C d'un autre cycle pyrrolique d'un autre motif de formule II, comme par exemple représenté ci-dessous:

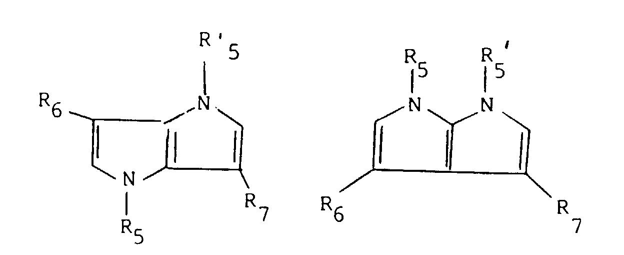

Les dérivés de pyrrole utilisés comme produits de départ sont connus ou peuvent être préparés selon les méthodes connues; voir par exemple les brevets et demandes de brevet US-A-4 567 250, US-A-4 697 000, EP-A-257 573, EP-A-229 992 et EP-A-315 559. Les oligomères inférieurs du pyrrole et de dérivés de pyrrole peuvent être obtenus par exemple selon les méthodes décrites par KAUFFMAN et LEXY, Chem. Ber. 114, 3674-3683 (1981) et par LINDENBERGER et al., Synthetic Metals, 18, 37-41 (1987).

Par le choix de produits pyrroliques de départ convenablement substitués, il est possible de diminuer la porosité du dépôt par réticulation des chaînes de polypyrrole, de faciliter l'accrochage ultérieur de colle ou de peinture, ou d'améliorer les qualités protectrices du revêtement obtenu. On peut choisir par exemple les substituants en fonction de leur contribution à l'imperméabilité aux gaz de la couche polymère formée; voir par exemple VAN KREVELEN, Properties of Polymers, Correlations with Chemical Structure, Elsevier Publishers Company (1972), chapitre 18. Il est également évident pour les spécialistes que par le choix convenable d'un ou plusieurs substituants sur le produit de départ, il sera possible d'obtenir une couche polymère contenant des groupements réactifs capables de favoriser, par réaction chimique (établissement de liaisons covalentes), l'accrochage d'une couche de peinture ou d'une colle ultérieurement appliquée.

Les produits de départ dérivés du pyrrole contenant des substituants à groupements polaires (par exemple -OH, y compris -COOH) permettent de renforcer les propriétés d'adhérence du polymère formé sur le substrat métallique. On sait que les colles pour métaux contiennent pratiquement toutes de tels groupements polaires. Les produits de départ contenant des groupements substituants réactifs (-OH, CO₂H, -NH₂, double liaison éthylénique, ou groupement époxy terminal) peuvent servir à la réticulation ultérieure de la couche polymère, ou à l'accrochage ultérieur d'une autre couche (colle, peinture par exemple), selon des méthodes qui sont connues en soi : par exemple réaction des groupement -OH avec des diisocyanates, réaction des groupements époxy avec des diamines, formation de liaisons amide, réaction de deux doubles liaisons -CH=CH₂ pour former un pont de réticulation du type -CH₂-CH=CH-CH₂-, etc... Enfin, le choix des substituants des dérivés de départ contenant des groupements substituants favorisant l'imperméabilité aux gaz et en particulier à l'oxygène (voir VAN KREVELEN article cité ci-dessus) permet d'obtenir des couches polymères dont les propriétés protectrices contre la corrosion par oxydation du substrat métallique sont renforcées.

Comme indiqué ci-dessus, les groupes alkyle ou aryle substitués ou insaturés et les groupes alkyle insaturés peuvent notamment faciliter l'accrochage ultérieur de peinture ou de colle, ou permettre une réticulation.

Le bain d'électropolymérisation peut notamment contenir, en plus d'un composé pyrrolique polymérisable, des composés pyrroliques convenablement substitués en position alpha, qui bloqueront l'allongement des chaînes de polymères, mais qui seront capables d'interréagir pour former des liaisons de réticulation. Par exemple, le bain peut contenir au moins un composé de formule III : 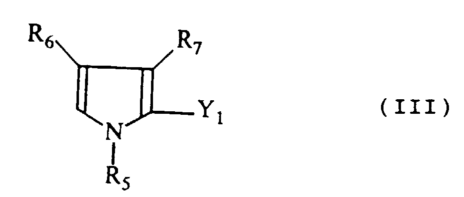 et au moins un composé de formule IV : 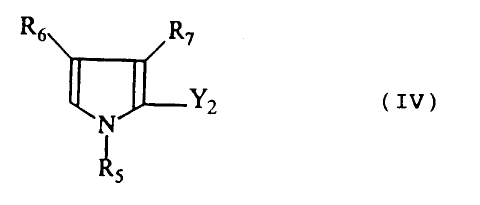 dans lesquelles Y₁ et Y₂ sont des groupes fonctionnels capables d'interréagir pour former une liaison covalente entre un motif dérivé d'un monomère de formule III et un motif dérivé d'un monomère de formule IV. Le substituant Y₁ peut représenter par exemple -(Z)ₘ-CO₂H et Y₂ peut représenter -(Z')ₙ-NH₂, Z et Z' représentant indépendamment un groupement alkylène, et m et n représentent indépendamment des nombres égaux à zéro ou 1. Le cas échéant, on peut donc effectuer en outre un traitement permettant de réticuler le revêtement, par exemple par réaction des groupements Y₁ et Y₂, comme indiqué ci-dessus. On peut en particulier effectuer le traitement de réticulation par chauffage à une température suffisante pour établir des liaisons amides par réaction des groupements carboxylique et amine. On peut opérer notamment à une température de l'ordre de 150 à 180° C, en l'absence de catalyseur, ou à une température inférieure en présence d'un catalyseur.

Pour l'opération d'électropolymérisation proprement dite, on peut améliorer le rendement électrique d'électropolymérisation en augmentant la concentration en solution dans le bain électrolytique des ions de formule I et/ou des composés de formule II. Par ailleurs, la présence des ions de formule I permet d'augmenter la concentration des composés de formule II.

La concentration en solution des ions de formule I est avantageusement supérieure à 0,1 mole/litre et de préférence supérieure ou égale à 0,5 mole/litre.

La concentration en solution des composés de formule II est avantageusement supérieure à 0,1 mole/litre et de préférence supérieure à 0,4 mole/litre.

Les limites supérieures de concentration des composés de formules I et II correspondent aux limites de solubilité des deux composés.

En général, plus les concentrations en composés de formules I et II sont élevées, meilleurs sont les conditions de dépôt.

A titre indicatif, pour une solution aqueuse contenant à la fois du pyrrole et du salicylate de sodium, les limites de solubilité sont approximativement:

| | Température ambiante | 50° C |
|---|---|---|
| pyrrole | 2,5 moles/l | 4 moles/l |
| salicylate de sodium | 4 moles/l | 4 moles/l. |

Le pH du bain électrolytique est compris entre 3 et 10 et de préférence compris entre 4 et 6.

En raison de la réduction de l'eau à la cathode, le pH de la solution augmente pendant l'électropolymérisation; il peut donc être nécessaire de compenser cette augmentation par addition d'acide, comme par exemple de l'acide salicylique, pour maintenir le pH à la valeur souhaitée. Il est également important de maintenir dans le bain électrolytique les concentrations dans la solution en monomère pyrrolique et en électrolyte, ici notamment les ions de formule I, aux valeurs souhaitées pour éviter toute perturbation dans le dépôt du revêtement.

On peut avantageusement augmenter l'adhérence du dépôt en élevant la température du bain, tout en conservant le bénéfice d'un fort ralentissement de l'oxydation du métal en surface de la pièce en métal oxydable; néanmoins, pour limiter l'évaporation du pyrrole, on évite de trop élever la température du bain.

On opère généralement à une température du bain électrolytique aqueux ou hydroalcoolique comprise entre 10° C et 60° C.

Avec une solution électrolytique aqueuse ou hydroalcoolique telle que décrite ci-dessus, il est possible de réaliser le dépôt par électropolymérisation dans les conditions électriques suivantes :
- la densité du courant d'électropolymérisation peut être ajustée en fonction de la vitesse de dépôt souhaitée, à des valeurs supérieures ou égales à 0,4 A/dm² et de préférence supérieures à 10 A/dm².

On arrête la réaction d'électropolymérisation lorsque la couche déposée atteint l'épaisseur désirée, généralement comprise entre 0,2 et 40 micromètres environ. L'épaisseur de revêtement est fonction du temps d'électropolymérisation. Comme le revêtement est conducteur et que sa surface ne se passive pas, il est ainsi possible de réaliser des revêtements épais.

Les conditions de dépôt ci-dessus sont particulièrement avantageuses en termes :
- d'absence de prétraitement de passivation de la pièce à revêtir;
- de vitesse élevée du dépôt qui peut atteindre 1 micromètre en moins de 5 secondes au lieu de au moins 1 minute si la solution ne contient pas d'ions de formule I;
- de rendement électrique d'électro-polymérisation;
- d'absence de risque de toxicité du fait de l'utilisation d'un solvant aqueux ou hydroalcoolique et de l'absence de prétraitement de la pièce à revêtir.

Le procédé selon l'invention permet notamment d'effectuer des dépôts sur des pièces en mouvement dans la solution électrolytique à une vitesse supérieure à 10 m/minute et permet donc d'effectuer des dépôts en continu sur ces tôles défilantes.

Le revêtement obtenu présente une très bonne adhérence à la surface de la pièce métallique, une grande homogénéité et une bonne aptitude à l'électrophorèse qui résulte du maintien de cette bonne adhérence du revêtement même sous polarisation cathodique.

Le revêtement polypyrrolique ainsi obtenu est à l'état dopé et conducteur ; la conductivité du film de revêtement atteint des valeurs comparables à celle d'un film déposé sur du platine dans un bain électrolytique aqueux ou hydroalcoolique.

Une pièce métallique ainsi revêtue ou une tôle sandwich comportant une tôle ainsi revêtue recouverte d'une seconde tôle peuvent être facilement assemblées par soudage électrique par des moyens conventionnels et selon une préparation classique des tôles sans enlèvement du revêtement à l'endroit de la soudure ; on peut également soumettre une pièce métallique ainsi revêtue à d'autres traitements ultérieurs de dépôt, notamment électrolytiques.

Pour rendre le revêtement moins conducteur si besoin était pour d'autres utilisations, on peut effectuer soit une suroxydation anodique soit un dédopage cathodique selon les méthodes connues.

Le procédé selon l'invention est utilisable pour la réalisation de revêtements primaires, notamment de protection contre la corrosion de la surface de pièces métalliques oxydables ou d'accrochage de couches en matériau polymère, par exemple de colle ou de peinture, à la surface de ce même type de pièces.

Bien entendu, la pièce à revêtir peut être en matériau quelconque préalablement revêtue d'un métal oxydable, comme du zinc, du cuivre, du nickel, de l'aluminium ou leurs alliages.

Dans les exemples suivants, les essais ont été réalisés en bains couverts pour éviter ou limiter l'évaporation du pyrrole ou de ses dérivés.

### EXEMPLE 1

On prépare un bain électrolytique aqueux constitué de 6,4 g de salicylate de sodium et de 1,35 g de pyrrole dans 40 cm³ d'eau distillée; on ajoute de l'acide salicylique pour amener le pH de la solution à environ 5.

Une plaque métallique de zinc, de fer ou de cuivre, préalablement dégraissée, est trempée dans la solution.

On réalise alors le dépôt de polypyrrole par électropolymérisation sur cette plaque qui sert d'anode en faisant passer entre les électrodes un courant d'environ 0,5 A/dm² pendant environ 20 secondes. Pendant la durée du dépôt, la mesure de la différence de potentiel entre l'anode et une électrode de référence au calomel saturé donne une valeur à peu près constante de 0,8 V.

Le film ainsi obtenu est très adhérent à la plaque métallique : un test d'adhérence effectué selon la norme AFNOR NFT 30038 donne un résultat d'adhérence de 100 %, c'est-à-dire que le taux d'arrachement du film par le papier adhésif est nul.

Le film est ensuite rincé à l'eau distillée et à l'éthanol, séché sous vide, puis stocké sous argon.

L'analyse des spectres XPS, infra-rouge et Raman de ce film indique que ce film possède une structure identique à celle d'un film de polypyrrole classique.

La conductivité du film déposé est d'environ 6 S/cm (mesure effectuée par la méthode des quatre pointes).

Lorsque, dans les mêmes conditions, le temps de passage du courant entre les électrodes est de 1 minute au lieu de 20 secondes, l'épaisseur du dépôt obtenu atteint 1 micromètre. La vitesse de dépôt est ici de l'ordre de 0,016 micromètre par seconde.

### EXEMPLE 2

On prépare le même bain électrolytique aqueux que dans l'exemple 1.

Une pièce en acier zingué par exemple galvanisé, électrozingué ou zingué sous vide, préalablement dégraissée à l'acétone, est trempée dans la solution.

On opère suivant les mêmes conditions que précédemment, et en particulier à la même vitesse de dépôt, c'est-à-dire avec la même densité de courant.

Le film obtenu présente les mêmes qualités d'adhérence et de structure, indépendammant du type d'acier zingué.

### EXEMPLE 3

On prépare le même bain électrolytique aqueux que dans l'exemple 1.

Une pièce en acier doux, préalablement dégraissée à l'acétone, est trempée dans la solution.

On opère suivant les mêmes conditions que précédemment, et en particulier à la même vitesse de dépôt, c'est-à-dire avec la même densité de courant.

Le film obtenu présente les mêmes qualités d'adhérence et de structure que dans l'exemple 1.

### EXEMPLE 4

Le bain électrolytique est constitué de 3,9 grammes de 5-chlorosalicylate de sodium et de 1,35 grammes de pyrrole dissous dans 40 cm³ d'eau distillée. Le pH du bain est ajusté à une valeur proche de 5 par addition d'acide 5-chlorosalicylique.

Une plaque métallique de zinc, préalablement dégraissée, est trempée dans le bain.

On réalise alors le dépôt de polypyrrole par électropolymérisation sur cette plaque qui sert d'anode en faisant passer entre les électrodes un courant de environ 0,4 A/dm² pendant 1 minute.

Pendant la durée du dépôt, la mesure de la différence de potentiel entre l'anode et une électrode de référence au calomel saturé donne une valeur à peu près constante de 0,8 V.

Le dépôt obtenu est très homogène.

### EXEMPLE 5

On prépare le même bain électrolytique aqueux que dans l'exemple 1.

Un disque en zinc ou en acier électrozingué est monté sur des moyens d'entraînement en rotation et plongé dans le bain électrolytique.

Pendant la rotation du disque à une vitesse d'environ 4000 tours par minute, on réalise alors le dépôt d'un film de polypyrrole par électropolymérisation sur ce disque qui sert d'anode en faisant passer entre les électrodes un courant de environ 30 A/dm² pendant environ 5 secondes.

Pendant la durée du dépôt, la mesure de la différence de potentiel entre l'anode et une électrode de référence au calomel saturé donne une valeur à peu près constante de 3,5 V.

Le dépôt obtenu est très homogène.

Le film ainsi déposé est très adhérent à la plaque métallique : un test d'adhérence effectué selon la norme AFNOR NFT 30038 donne un résultat d'adhérence de 100%, c'est-à-dire que le taux d'arrachement du film par le papier adhésif est nul.

L'épaisseur du film déposé est d'environ 5 micromètres.

La conductivité du film déposé est d'environ 4,8 S/cm (mesure effectuée par la méthode des quatre pointes), soit une valeur très supérieure à celle de films déposés en milieu oxalate selon l'art antérieur.

### EXEMPLE 6

On prépare le bain électrolytique aqueux constitué de 12,8 g de salicylate de sodium, 2,7 g de pyrrole dans 40 cm³ d'eau distillée. On ajoute de l'acide salicylique pour ramener le pH à environ 5.

Un disque en zinc ou en acier électrozingué est monté sur des moyens d'entraînement en rotation et plongé dans le bain électrolytique.

Pendant la rotation du disque à une vitesse d'environ 4500 tours par minute, on réalise alors le dépôt d'un film de polypyrrole par électropolymérisation sur ce disque qui sert d'anode en faisant passer entre les électrodes un courant de environ 100 A/dm² pendant environ 1 seconde.

Pendant le dépôt, la température du bain est d'environ 42°C.

L'épaisseur du film déposé est d'environ 3 micromètres.

La conductivité du film déposé est d'environ 0,65 S/cm (mesure effectuée par la méthode des quatre pointes).

### EXEMPLE 7

On prépare le même bain électrolytique que dans l'exemple 1 mais on ajoute en plus "a" g d'un dérivé N-substitué du pyrrole, choisi parmi les trois monomères suivants :
i) 6-(1-pyrrolyl)-n-hexanol 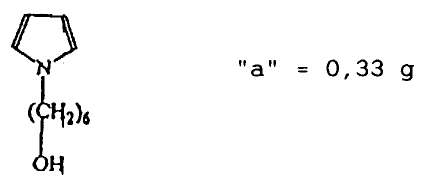
ii) acide 6((1-pyrrolyl)-n-hexanoïque 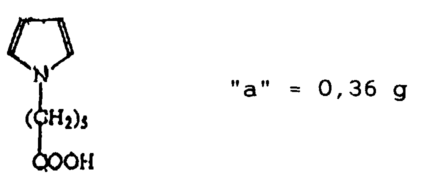
iii) 3-(1-pyrrolyl)1,2-époxypropane

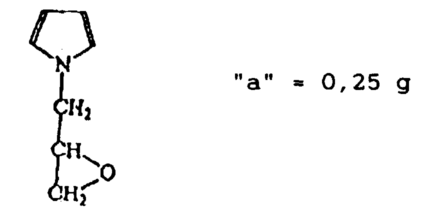

Ces monomères ont été synthétisés par l'une quelconque des méthodes suivantes :
- par la méthode classique consistant à traiter le pyrrole par une base très forte (K; Na) et à faire réagir l'anion pyrrolique ainsi formé avec un agent alkylant approprié (G. BIDAN, Tetrahedron Letters, 26 (1985), 735 ; G. BIDAN et M. GUGLIELMI, Synthetic Metals, 15 (1986), 49) ;
- par la technique du transfert de phase solide-liquide (W.C. GUIDA et D.J.MATHRE, J. Org. Chem., 45, (1980) 3172).

Les proportions relatives du pyrrole et de dérivé pyrrolique dans le milieu sont alors dans les rapports molaires 1:0,1.

Le pH du bain est ajusté à 5 par ajout d'acide salicylique comme dans l'exemple 1.

Une plaque métallique de fer, d'acier, de zinc ou d'acier zingué, préalablement dégraissé, est trempée dans la solution.

On réalise alors le dépôt de polymère par électropolymérisation sur cette plaque, comme dans l'exemple 1 et, puisque les potentiels d'oxydation du pyrrole et du dérivé N-substitué sont très proches, on mesure une différence de potentiel d'environ 0,8 V entre l'anode et une électrode de référence au calomel saturé pendant le dépôt.

La couche de polymère ainsi obtenue se compose à la fois de radicaux ou de chaînes de pyrrole et de radicaux ou de chaînes de pyrrole N-substitués.

En choisissant la nature et la concentration de pyrrole N-substitué, on peut avantageusement :
i) renforcer les propriétés d'adhérence du revêtement sur le substrat métallique;
ii) améliorer les propriétés de protection de la couche déposée, après notamment un traitement de réticulation (par chauffage par exemple);
iii) favoriser l'accrochage d'une autre couche (colle, peinture).

Quel que soit le dérivé N-substitué du pyrrole additionné dans le bain électrolytique, les films déposés présentent une adhérence et une homogénéité au moins équivalentes à celles de leurs homologues décrits dans l'exemple 1 et qui correspondent à des polypyrroles standards, ne comportant pas de motifs pyrroliques N-substitués dans les chaînes.

### EXEMPLE 8

On prépare le même bain électrolytique que dans l'exemple 1, mais on ajoute en plus 0,25 g de 2-(2-éthylamino)-N-méthylpyrrole et 0,25 g d'acide N-méthylpyrrolyl-2-carboxylique, qui sont des produits commerciaux.

Les proportions relatives de pyrrole et des dérivés pyrroliques sont dans les rapports 1:0,1:0,1.

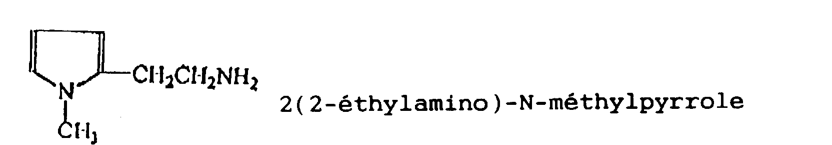

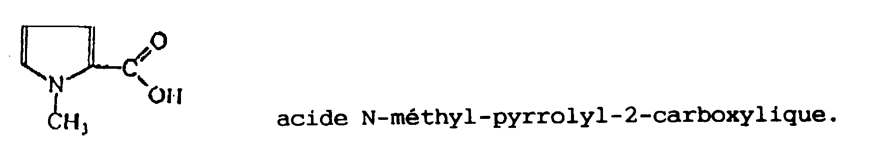

Le pH du bain est ajusté à 5 par ajout d'acide salicylique.

Une plaque métallique de fer, d'acier, de zinc ou d'acier zingué, préalablement dégraissée, est trempée dans la solution.

On procède alors suivant les mêmes conditions opératoires que dans l'exemple 1 et on mesure également une différence de potentiel d'environ 0,8 V entre l'anode et une électrode de référence au calomel saturé.

Du fait que les potentiels d'oxydation des pyrroles substitués sont très proches de celui du pyrrole simple ( N + 0,8 V/ECS), les deux comonomères présents dans le bain électrolytique participent à la réaction d'électropolymérisation et interviennent en bloquant l'allongement des chaînes.

Les films de polymère déposés présentent une adhérence et une homogénéité au moins équivalentes à celles de leurs homologues décrits dans l'exemple 1.

Après séchage, les films sont chauffés dans un four à 180° C pendant 10 minutes, ce qui a pour effet de provoquer une condensation entre les groupes -COOH et -NH₂ et par suite des réticulations interchaînes avec formation de liaisons amides entre les dérivés carboxylés et aminés.

### EXEMPLE 9

On prépare un bain électrolytique aqueux constitué de 70,4 kg de salicylate de sodium et de 7,4 l de pyrrole dans 220 l d'eau distillée.

Le pH du bain est ajusté à 5 par ajout d'acide salicylique.

L'électropolymérisation est réalisée dans une cellule à circulation d'électrolyte. La plaque métallique à revêtir est une plaque en acier, de surface utile 170 cm², préalablement revêtue de 10 µm de zinc. Elle est maintenue fixe alors que l'électrolyte est en circulation. Elle est reliée au pôle (+) (anode) d'un générateur permettant de délivrer de fortes intensités (quelques centaines d'ampères par décimètre carré). L'autre pôle du générateur est relié à une cathode en zinc. La distance séparant l'anode de la cathode est de 10 mm.

Différentes modalités de dépôt sont envisagées, en faisant varier la vitesse d'écoulement du fluide (V) entre l'anode et la cathode, la densité de courant imposée (J) et le temps d'électrolyse (t) (tableau 1).

**TABLEAU 1**

| N° essai | V (m/min) | J_{imposée} (A/dm²) | t(s) | Epaisseur (µm) |
|---|---|---|---|---|
| 1 | 150 | 10 | 8 | 2 |
| 2 | 150 | 10 | 4 | 1 |
| 3 | 150 | 10 | 2 | 0,5 |
| 4 | 250 | 10 | 20 | 5 |
| 5 | 450 | 10 | 8 | 2 |
| 6 | 450 | 10 | 4 | 1 |
| 7 | 450 | 25 | 3 | 2 |

Dans les essais 1 à 3, on fait varier le temps de dépôt et l'épaisseur de dépôt qui en résulte varie dans les mêmes proportions de 0,5 µ à 2 µ; toutes les couches ainsi déposées présentent une bonne adhérence au substrat (100 % selon essai normalisé, cf. exemple 5) et une bonne homogénéité.

Dans les essais 5 et 6, on fait varier, par rapport à la série d'essais précédente, la vitesse d'écoulement de bain d'electropolymérisation entre l'anode et la cathode : la couche obtenue présente la même épaisseur, et toujours une bonne adhérence et une bonne homogénéité.

L'essai 7 correspond à une densité de courant de dépôt plus élevée, qui n'entame pas les propriétés d'adhérence et d'homogénéité de la couche.

L'essai 4 est intermédiaire entre la première et la deuxième série d'essais : la vitesse élevée d'écoulement du bain prévient tout risque de précipitations locales qui peuvent se produire du fait d'une durée plus élevée de dépôt.

### EXEMPLE 10

On prépare le même bain électrolytique aqueux que dans l'exemple 6.

Un disque en zinc ou en acier électrozingué est monté sur des moyens d'entraînement en rotation et plongé dans le bain électrolytique.

Pendant la rotation du disque à une vitesse d'environ 4500 trs/min, on réalise le dépôt d'un film de polypyrrole par électropolymérisation sur ce disque qui sert d'anode, en faisant passer entre les électrodes un courant d'environ 70 A/dm² pendant environ 1 s. L'épaisseur du film déposé est d'environ 1 µm.

On prépare ensuite un second bain électrolytique aqueux constitué de 0,32 g de N-méthylpyrrole et de 2,8 g de sulfate de sodium (Na₂SO₄) dans 40 ml d'eau distillée.

Le disque en acier zingué revêtu de polypyrrole est monté sur les mêmes moyens d'entraînement que précédemment et plongé dans le nouveau bain électrolytique.

Pendant la rotation du disque à une vitesse d'environ 4500 trs/min, on réalise sur le film de polypyrrole le dépôt d'un film de poly(N-méthylpyrrole) par électropolymérisation sur ce disque qui sert d'anode, en faisant passer un courant de 30 A/dm² pendant environ 2 s.

Le nouveau dépôt obtenu est très homogène et, du fait du caractère hydrophobe de poly(N-méthylpyrrole), améliore encore la résistance à la corrosion du substrat.

## Revendications

1. Procédé de dépôt d'un revêtement adhérent de polypyrrole sur la surface d'une pièce en métal oxydable, notamment à base de fer, de zinc, de cuivre, de nickel ou d'aluminium ou de leurs alliages, par électropolymérisation d'une solution électrolytique aqueuse ou hydroalcoolique de pyrrole et/ou d'un ou plusieurs pyrroles substitués, où l'anode du dispositif d'électropolymérisation est constituée de ladite pièce en métal oxydable, ladite solution contenant des ions choisis parmi les ions de formule : 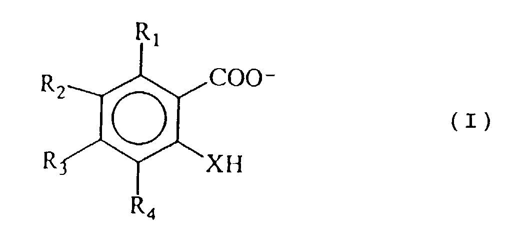 dans laquelle
X est choisi parmi O, S et NH,
R₁, R₂, R₃ et R₄ sont choisis indépendamment l'un de l'autre parmi -H, -Cl, -Br, -F, -I, -OH, -SH, -NH₂, -CHO, -COOH, -SO₃H, des groupes aryle, alkyle en C₁ à C₂₀, aralkyle et alkylaryle, ces groupes pouvant être substitués par un ou plusieurs groupes choisis parmi -OH, -SH, -NH₂, -CHO, -COOH, =O, -CONH₂, -SO₃H, époxy ou alcoxy en C₁-C₆ ou pouvant former entre eux une structure cyclique.

2. Procédé selon la revendication 1, caractérisé en ce que la solution contient des ions de formule I dans laquelle X est l'oxygène.

3. Procédé selon la revendication 1 ou la revendication 2, caractérisé en ce que la concentration en solution des ions de formule I est supérieure ou égale à 0,1 mole/litre.

4. Procédé selon la revendication 3, caractérisé en ce que la concentration en ions de formule I est supérieure ou égale à 0,5 mole/litre.

5. Procédé selon l'une quelconque des revendications précédentes, caractérisé en ce que la densité du courant d'électropolymérisation est supérieure ou égale à 0,4 A/dm².

6. Procédé selon la revendication 5, caractérisé en ce que la densité du courant d'électropolymérisation est supérieure à 10 A/dm².

7. Procédé selon l'une quelconque des revendications précédentes, caractérisé en ce que la concentration totale en solution de pyrrole et/ou d'un ou plusieurs pyrroles substitués est supérieure à 0,1 mole/litre.

8. Procédé selon l'une quelconque des revendications précédentes, caractérisé en ce que la concentration totale en solution de pyrrole et/ou d'un ou plusieurs pyrroles substitués est supérieure à 0,4 mole/litre.

9. Procédé selon l'une quelconque des revendications précédentes, caractérisé en ce que le pH de ladite solution est compris entre 3 et 10.

10. Procédé selon l'une quelconque des revendications précédentes caractérisé en ce que le pH de ladite solution est compris entre 4 et 6.

11. Procédé selon l'une quelconque des revendications précédentes, caractérisé en ce que ladite anode est en mouvement dans la solution électrolytique à une vitesse supérieure à 10 m/minute.

12. Bain aqueux ou hydroalcoolique d'électropolymérisation pour la mise en oeuvre d'un procédé de dépôt d'un revêtement adhérent de polypyrrole sur une pièce en métal oxydable, notamment à base de fer, de zinc, de cuivre, de nickel ou d'aluminium ou de leurs alliages, par électropolymérisation d'une solution électrolytique aqueuse de pyrrole et/ou d'un ou plusieurs pyrroles substitués, où l'anode du dispositif d'électropolymérisation est constituée de ladite pièce en métal oxydable, caractérisé en ce qu'il contient dans la solution électrolytique aqueuse du pyrrole et/ou un ou plusieurs pyrroles substitués et des ions choisis parmi les ions de formule : 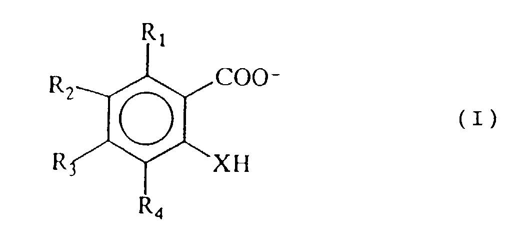 dans laquelle
X est choisi parmi O, S et NH,
R₁, R₂, R₃ et R₄ sont choisis indépendamment l'un de l'autre parmi -H-, -Cl, -Br, -F, -I, -OH, -SH, -NH₂, -CHO, -COOH, -SO₃H, des groupes aryle, alkyle en C₁ à C₂₀, aralkyle et alkylaryle, ces groupes pouvant être substitués par un ou plusieurs groupes choisis parmi -OH, -SH, -NH₂, -CHO, -COOH, =O, -CONH₂, -SO₃H, époxy ou alcoxy en C₁-C₆ ou pouvant former entre eux une structure cyclique.

13. Procédé de protection contre la corrosion de pièces en métal oxydable, notamment à base de fer, de zinc, de cuivre ou d'aluminium ou de leurs alliages, caractérisé en ce que l'on dépose un revêtement de polypyrroles sur la surface de ladite pièce selon l'une quelconque des revendications 1 à 11.

## Patentansprüche

1. Verfahren zur Abscheidung des haftenden Polypyrrol-Überzugs auf der Oberfläche eines Gegenstandes aus oxidierbarem Metall, insbesondere auf der Grundlage von Eisen, Zink, Kupfer, Nickel oder Aluminium oder Legierungen davon, durch Elektropolymerisation einer wäßrigen oder wäßrig-alkoholischen Elektrolytlösung von Pyrrol und/oder einem oder mehreren substituierten Pyrrolen, wobei die Anode der Elektropolymerisations-Einrichtung aus dem genannten Gegenstand aus dem oxidierbaren Metall gebildet ist und die Lösung Ionen enthält, ausgewählt aus Ionen der Formel: 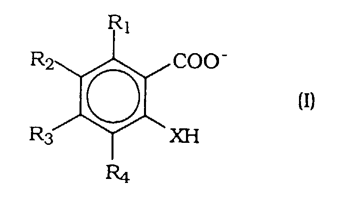 in der
X aus O, S und NH ausgewählt ist, und
R₁, R₂, R₃ und R₄ unabhängig voneinander aus -H, -Cl, -Br, -F, -I, -OH, -SH, -NH₂, -CHO, -COOH, -SO₃H, Arylgruppen, C₁-C₂₀-Alkylgruppen, Aralkylgruppen und Alkylarylgruppen, wobei diese Gruppen durch eine oder mehrere Gruppen ausgewählt aus -OH, -SH, -NH₂, -CHO, -COOH, =O, -CONH₂, -SO₃H, Epoxy oder C₁-C₆-Alkoxy substituiert sein können oder untereinander eine cyclische Struktur bilden können, ausgewählt sind.

2. Verfahren nach Anspruch 1, dadurch gekennzeichnet, daß die Lösung Ionen der Formel I enthält, in der X Sauerstoff bedeutet.

3. Verfahren nach Anspruch 1 oder 2, dadurch gekennzeichnet, daß die Konzentration der Lösung an Ionen der Formel I größer oder gleich ist als 0,1 Mol/Liter.

4. Verfahren nach Anspruch 3, dadurch gekennzeichnet, daß die Konzentration an Ionen der Formel I größer oder gleich ist als 0,5 Mol/Liter.

5. Verfahren nach einem der vorhergehenden Ansprüche, dadurch gekennzeichnet, daß die Stromdichte bei der Elektropolymerisation gleich oder größer ist als 0,4 A/dm².

6. Verfahren nach Anspruch 5, dadurch gekennzeichnet, daß die Stromdichte der Elektropolymerisation größer ist als 10 A/dm².

7. Verfahren nach einem der vorhergehenden Ansprüche, dadurch gekennzeichnet, daß die Gesamtkonzentration von Pyrrol und/oder einem oder mehreren substituierten Pyrrolen in der Lösung größer ist als 0,1 Mol/Liter.

8. Verfahren nach einem der vorhergehenden Ansprüche, dadurch gekennzeichnet, daß die Gesamtkonzentration an Pyrrol und/oder einem oder mehreren substituierten Pyrrolen in der Lösung größer ist als 0,4 Mol/Liter.

9. Verfahren nach einem der vorhergehenden Ansprüche, dadurch gekennzeichnet, daß der pH-Wert der Lösung zwischen 3 und 10 liegt.

10. Verfahren nach einem der vorhergehenden Ansprüche, dadurch gekennzeichnet, daß der pH-Wert der Lösung zwischen 4 und 6 liegt.

11. Verfahren nach einem der vorhergehenden Ansprüche, dadurch gekennzeichnet, daß die Anode in der Elektrolytlösung mit einer Geschwindigkeit von größer als 10 m/Minute bewegt wird.

12. Wäßriges oder wäßrig-alkoholisches Bad für die Elektropolymerisation zur Durchführung eines Verfahrens zurAbscheidung eines haftenden Überzugs aus Polypyrrol an einem Gegenstand aus einem oxidierbaren Material, insbesondere auf der Grundlage von Eisen, Zink, Kupfer, Nickel oder Aluminium oder Legierungen davon, durch Elektropolymerisation einer wäßrigen Elektrolytlösung von Pyrrol und/oder einem oder mehreren substituierten Pyrrolen, wobei die Anode der Elektropolymerisations-Einrichtung durch den Gegenstand aus dem oxidierbaren Metall gebildet wird, dadurch gekennzeichnet, daß sie in der wäßrigen Elektrolytlösung Pyrrol und/oder ein oder mehrere substituierte Pyrrole und Ionen ausgewählt aus Ionen der Formel: 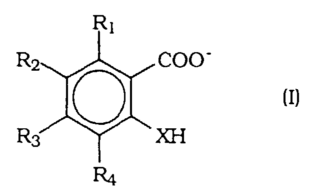 in der
X aus O, S und NH ausgewählt ist, und
R₁, R₂, R₃ und R₄ unabhängig voneinander aus -H, -Cl, -Br, -F, -I, -OH, -SH, -NH₂, -CHO, -COOH, -SO₃H, Arylgruppen, C₁-C₂₀-Alkylgruppen, Aralkylgruppen und Alkylarylgruppen, wobei diese Gruppen durch eine oder mehrere Gruppen ausgewählt aus -OH, -SH, -NH₂, -CHO, -COOH, =O, -CONH₂, -SO₃H, Epoxy oder C₁-C₆-Alkoxy substituiert sein können oder untereinander eine cyclische Struktur bilden können, ausgewählt sind,
enthält.

13. Verfahren zum Schutz von Gegenständen aus einem oxidierbaren Metall, insbesondere auf der Grundlage von Eisen, Zink, Kupfer, Aluminium oder Legierungen davon, gegen Korrosion, dadurch gekennzeichnet, daß man auf der Oberfläche des Gegenstandes einen Überzug aus Polypyrrolen gemäß einem der Ansprüche 1 bis 11 abscheidet.

## Claims

1. Process for depositing an adhering coating of polypyrrole on the surface of a component made of oxidisable metal, notably based on iron, zinc, copper, nickel or aluminium or alloys thereof, by electropolymerisation of an aqueous or aqueous-alcoholic electrolytic solution of pyrrole and/or one or more substituted pyrroles, wherein the anode of the electropolymerisation device consists of said component of oxidisable metal, said solution containing ions selected from among the ions of formula: 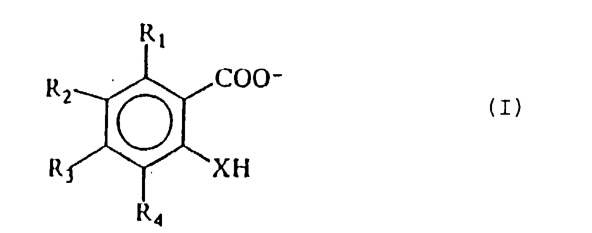 wherein
X is selected from among 0, S and NH,
R₁, R₂, R₃ and R₄ independently of one another are selected from among -H, -Cl, -Br, -F, -I, -OH, -SH, -NH₂, -CHO, -COOH, -SO₃H, the aryl groups, C₁₋₂₀-alkyl groups, aralkyl and alkylaryl groups, which groups may be substituted by one or more groups selected from among -OH, -SH, -NH₂, -CHO, -COOH, =O, -CONH₂, -SO₃H, epoxy or C₁₋₆-alkoxy or may form between them a cyclic structure.

2. Process according to claim 1, characterised in that the solution contains ions of formula I wherein X is oxygen.

3. Process according to claim 1 or 2, characterised in that the concentration of ions of formula I in solution is greater than or equal to 0.1 mole/litre.

4. Process according to claim 3, characterised in that the concentration of ions of formula I is greater than or equal to 0.5 mole/litre.

5. Process according to any of the preceding claims, characterised in that the density of the electropolymerisation current is greater than or equal to 0.4 A/dm².

6. Process according to claim 5, characterised in that the density of the electropolymerisation current is greater than 10 A/dm².

7. Process according to any one of the preceding claims, characterised in that the total concentration of pyrrole and/or one or more substituted pyrroles in solution is greater than 0.1 mole/litre.

8. Process according to any one of the preceding claims, characterised in that the total concentration of pyrrole and/or one or more substituted pyrroles in solution is greater than 0.4 mole/litre.

9. Process according to any of the preceding claims, characterised in that the pH of the solution is between 3 and 10.

10. Process according to any of the preceding claims, characterised in that the pH of the solution is between 4 and 6.

11. Process according to any one of the preceding claims, characterised in that the anode is moving in the electrolyte solution at a speed greater than 10 m/minute.

12. Aqueous or aqueous-alcoholic electropolymerisation bath for carrying out a process for depositing an adhering coating of polypyrrole onto a component made of oxidisable metal, notably based on iron, zinc, copper, nickel or aluminium or the alloys thereof, by electropolymerisation of an aqueous electrolytic solution of pyrrole and/or one or more substituted pyrroles, wherein the anode of the electropolymerisation device consists of said component of oxidisable metal, characterised in that it contains, in the aqueous electrolyte solution, pyrrole and/or one or more substituted pyrroles and ions selected from among the ions of formula: 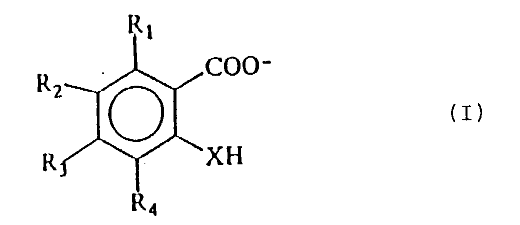 wherein
X is selected from among O, S and NH,
R₁, R₂, R₃ and R₄ independently of one another are selected from among -H, -Cl, -Br, -F, -I, -OH, -SH, -NH₂, -CHO, -COOH, -SO₃H, the aryl groups, C₁₋₂₀-alkyl groups, aralkyl and alkylaryl groups, which groups may be substituted by one or more groups selected from among -OH, -SH, -NH₂, -CHO, -COOH, =O, -CONH₂, -SO₃H, epoxy or C₁₋₆-alkoxy or may form between them a cyclic structure.

13. Process for protecting components of oxidisable metal, notably based on iron, zinc, copper or aluminium or alloys thereof, against corrosion, characterised in that a coating of polypyrroles is deposited on the surface of said component according to one of claims 1 to 11.
